# EUROPEAN PATENT SPECIFICATION

(11) **EP 4 589 976 B1**
(45) Date of publication and mention of the grant of the patent: **18.11.2026**
(21) Application number: 25172502.4
(22) Date of filing: 12.02.2014
(51) Int. Cl.: H04N 1/21, H04N 5/262, H04N 23/63

(54) **A METHOD FOR PRESENTATION OF IMAGES**
VERFAHREN ZUR DARSTELLUNG VON BILDERN
PROCÉDÉ DE PRÉSENTATION D'IMAGES

(43) Date of publication of application: 23.07.2025
(62) Document number(s) of the earlier application(s) in accordance with Art. 76 EPC: 21211971.3 / 4 020 969; 19196883.3 / 3 684 048; 14711296.5 / 3 105 917
(73) Proprietor: Sony Group Corporation, Tokyo 108-0075 (JP)
(72) Inventor: JOHANSSON, Fredrik, 23437 Lomma (SE)
(74) Representative: Neij & Lindberg AB

(56) References cited:
- US-A1- 2005 190 280
- US-A1- 2010 194 963

## Description

### TECHNICAL FIELD

The present invention relates to solutions for image presentation on a display of an electronic device. In particular the disclosure provides a solution for presenting a selected image with a visual effect on the display, wherein the selected image is one image of a burst of images.

### BACKGROUND ART

Today, images captured in a burst sequence may be processed in various ways. For example, the images may be presented to a user for selection of images to keep. In another example, the images may be combined or composited to form a single image. In another example, a burst sequence may be taken of a scene including moving objects, such as blinking eyes, moving arms. The moving object may be identified and the user can then adjust the image easily, such as removing the moving object through comparison between the images in the burst of image.

A burst sequence of images is several images or frames captured in a quick session. This is done by choosing Burst mode or Time shift mode on the image capturing device and either pressing a hard ware button, i.e. the shutter button, holding it down or pressing a screen capturing button.

Hence, Burst mode or time shift mode generates a sequence of photos that are not utilized except for very specific occasions.

US2010194963 discloses how a user-preferred image is easily displayed for a plurality of images generated by bracketing capture. A recording control unit adds the same group identifier to a plurality of captured images generated by the same bracketing-capture operation, allocates the plurality of captured images to the same folder, and records the plurality of captured images on a recording unit as bracketing-captured images. A priority image setting unit adds priority information to a bracketing-captured image selected by a user among the bracketing-captured images recorded on the recording unit, and sets a priority image. In a predetermined display mode, a display control unit displays only the priority image among the bracketing-captured images on the display unit on the basis of the priority information.

US2005/190280A1 describes a digital camera and related methods enabling a scrolling slideshow of captured images across a display screen. The display screen can be the digital camera's display screen or an external display screen (e.g., a TV screen or a computer monitor) driven by the digital camera. The number of images scrolled across a display screen can be adjusted for ease and efficiency of viewing based on user preference. The camera provides controls for image scrolling including speed adjustment, forward scrolling, reverse scrolling, scroll pausing, and scroll resuming. The camera permits images to be locked in place on the display screen during the scrolling slideshow, which provides for easy comparison with other images that continue to scroll across the display screen. When an image is locked, scrolling images appear to scroll to a position behind the locked image.

### SUMMARY OF THE INVENTION

The present invention is provided in the independent claims, whereas various embodiments are set out in the dependent claims.

The disclosure overcomes at least some of the above mentioned problems and makes it possible to utilize otherwise unused data in burst shot images and to "hide" loading time of a full resolution of the main image, e.g. the frames before and after the main image could be stored with low resolution and be utilized during the transition duration and only the main image would be displayed with full resolution.

According to one aspect of the disclosure, a device as defined in claim 1 and a method as defined in claim 15 are provided.

In one example, the method further comprises the steps of adding a light effect or a sound effect when displaying the main image.

According to one aspect of the invention, the method further comprising the step of defining the images obtained after the main images as pro-images and displaying the pro-images after displaying the pre-images and the main image in sequence on the display. In one example, wherein the defined pro-images comprises more than one image, the method further comprises the steps of generating a visual effect of the more than one pro-images and displaying the at least more than one pro-images with said generated visual effect after displaying the defined main image. In one example, the visual effect comprises the steps of displaying the at least more than one pro-images directly after each other's, starting with the first of the at least one pro-images.

In aspect of the invention, the burst of images is captured by using burst shot mode.

In aspect of the invention, the burst of images is captured by using time shift mode.

In one aspect of the invention, the method further comprises the steps of storing the pro-images obtained before the main image and the pre-images obtained after the main image with low resolution and storing the main image with high resolution. Such a solution could potentially be used to "hide" loading time of the full resolution of the main image, e.g. lower resolutions could be utilized during the transition duration and only the final frame would be displayed with full resolution.

The features of the above-mentioned embodiments can be combined in any combinations.

Some embodiments of the invention provide how to utilize otherwise unused data when capturing a burst shot of images. This innovation utilizes these burst shot images to enrich and differentiate the navigation between images in an album or photo viewer application. It is an advantage with some embodiments of the invention that they may allow for creating "movement" before the specific image is displayed to make navigation more interesting and "rich" when swiping between images. When swiping between images, a few frames before and after the photo (in the sequence) is used to create this "movement" before the specific image is displayed.

### BRIEF DESCRIPTION OF THE DRAWINGS

Further objects, features and advantages of the present invention will appear from the following detailed description of the invention, wherein embodiments of the invention will be described in more detail with reference to the accompanying drawings, in which:
FIG. 1 discloses a block diagram of an electronic device, e.g. a mobile phone where the method is implemented.
Fig.2 discloses an example of a burst of images according to the invention.
Fig. 3 discloses a flowchart of the method in an electronic device according to the invention.
Fig. 4a-b discloses a flowchart of the method in an electronic device according to the invention.

### DETAILED DESCRIPTION

The invention makes it possible for utilizing all the images or frames of a burst of images, obtained by the use of burst shot or time shift mode, to enrich and differentiate navigation between photos in an album or photo viewer application.

A burst of images is images or frames captured in a quick session. This is done by choosing a burst or continuous high speed mode, i.e. Burst mode or Time shift mode, on the image capturing device and either pressing a hard ware button, HW button, i.e. the shutter button, holding it down or pressing a screen capturing button. A burst or continuous high speed mode is a shooting mode when capturing still images. It allows several images or frames to be captured in quick succession, a burst of images. Burst mode enables the user to select the best photo from a range of photos taken before and after the actual HW or on screen capture button is pressed. Time shift mode operates in a similar manner by taking a sequence of pictures when the capture button is pressed. These are examples; there may be other modes that currently exist or may exist in the future.

Embodiments of the present invention relate, in general, to the field of electronic devices. The present invention is for example applicable in electronic devices such as mobile telephones, pagers, communicators, wearable devices such as wristlets, watches or the like, smart phones, laptops, computers, or electronic organizers. The present invention is applicable and suitable for all electronic devices with visual interface and wireless capability, connectable to a server or any type of external memory/processor source. The description is focused on components relevant to the specific objects and functions of the invention while other components may be conventional. However, for the sake of clarity and simplicity, most embodiments outlined in this specification are related to mobile phones.

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

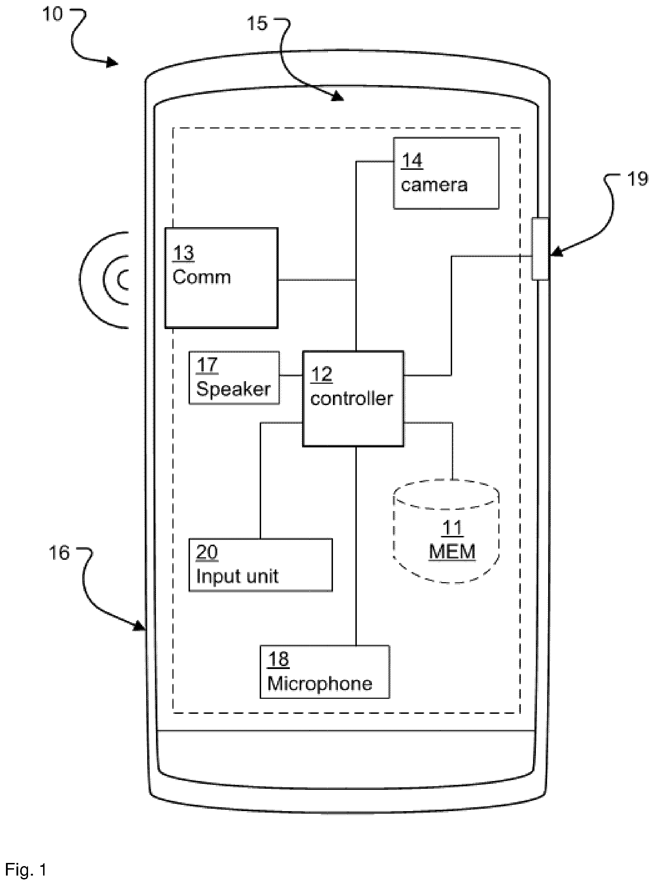

The invention will now be described in more detail. According to one aspect of the invention, shown in figure 1, an electronic device is illustrated generally at 10. The electronic device 10 will be referred to below as a mobile phone. However, as mentioned above, reference to "mobile phone" includes various other devices, such as, for example, those mentioned above.

The mobile phone 10 comprises conventional components such as radio interfaces for wireless communication 13, a case (housing) 16, a speaker 17, a microphone 18, a display 15, e.g. liquid crystal display, light emitting diode display, or other display, and an on/off switch 19, and an input unit, such as a number of keys generally indicated at 20. The keys may include a number of keys having different respective functions. For example, the keys may include a navigation key, selection key or some other type of key. As an example, the navigation key may be used to scroll through lists, i.e. albums of images, shown on the display 15, to select one or more of the items, i.e. images, shown in a list on the display 15. The speaker 17, microphone 18, display 15 and keys 20 may be used and function in the usual ways in which a mobile phone typically is used, e.g. to initiate, to receive and/or answer telephone calls, to send and to receive text messages, to connect with and carry out various functions via a network, such as the internet or some other network. These are examples; there may be other uses that currently exist or may exist in the future. The mobile phone further includes a controller circuit 12. The controller circuit is configured to execute the method according to the invention. The controller is typically a processor comprising a computer code for executing the method. However, the method may as well be hardware implemented or a combination of hardware and software.

The mobile phone also includes a camera 14, which is arranged to receive or to capture an image. The camera 14 may be the same type of camera typically used in a mobile phone or it may be another type of camera. As an example, the camera 14, display 15 and an image capture key 20 may be used in a conventional manner to capture an image, e.g. the view seen by the camera 14 may be shown on the display 15 while the user views that image and as desired selectively presses the image capture key 20 to capture an image and to store the captured image in a memory 11. The setting of burst shoot or time shift mode may be selected by a user. The settings may include burst capture length, burst capture frame rate, exposure, capture start time offset relative to button press and any other relevant settings. The user may also select the burst capture settings by accepting default settings for all of the burst capture settings.

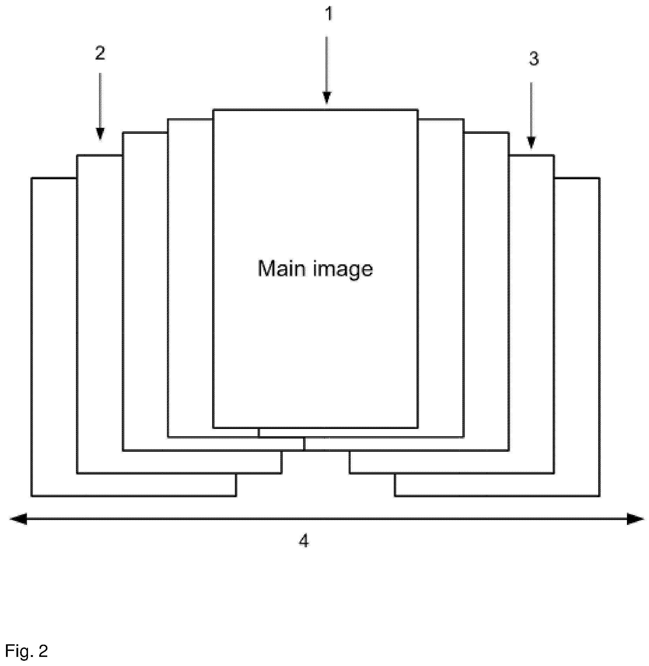

According to one aspect of the invention, as shown in figure 2, a burst of images 4 is captured by selecting burst shoot or time shift mode on a camera 14 of the mobile phone and stored in an album of images on the mobile phone. The captured burst of images may contain at least a main image 1 and at least two additional frames 2, preferable three or more, before the main image, and optionally further frames 3 after the main image 1.

According to one aspect of the invention, when a user is navigating between full screen images by navigating left-right or forward-back in an album of images, the additional images or frames before the main image 1, pre-images 2, are being played back before it stops at the main image 1 as an in-transition or zoom in effect. The pre-images are played back as a frame-by-frame animation, with a specific frame rate, until stopping at the main image. In one example, "Ease-in"/"Ease-out" transition timing technique may be applied to the frame animation to enable a smoother, more natural transition effect. One way to make animations move in a more life-like manner is to vary the rate at which they move. Animation imitates the world that we live in, so it's important that movements within the animations feel as if they are based on real world movements, even if they are exaggerated. In our world, it is very rare that something will move at a constant rate. For example, when a user raises his arm straight up above his head, the action usually starts out slowly and then quickly accelerates. This generates an interesting visual effect that makes the photos come alive before they stop at the main image 1. This can be done in a subtle way by using few frames or exaggerated by using more frames. In addition, a light effect can be applied to amplify the animation. Similarly, when going to the next image, the additional images after the main image 1, pro-images 3, was taken are played back as an out-transition or zoom out effect, before the next image is displayed by using the same in-transition effect.

According to one aspect of the invention, the same visual effect, as presented above, is utilized when swiping over images in an album overview mode. The visual effect makes images come alive when rearranging the grid, such as zoom in / zoom out transitions or when scrolling to see more pictures.

According to one aspect of the invention, the visual effect could be used to "hide" loading time of the full resolution of the main image, e.g. displaying the pre-images and the pro-images with lower resolutions could be utilized during the transition duration and only the final frame would be displayed with full resolution.

The function of achieving an image sequence per "main photo" could be hidden and turned on by default. E.g. there is no need to go into a specific mode in order to create compatible photos. This means that each photo would consist of a sequence of around 3 or more images, but all images except the main photo wouldn't need to be stored with full resolution since this is an effect only utilized when browsing photos on the device, thus saving some space in comparison with storing full resolution image sequences.

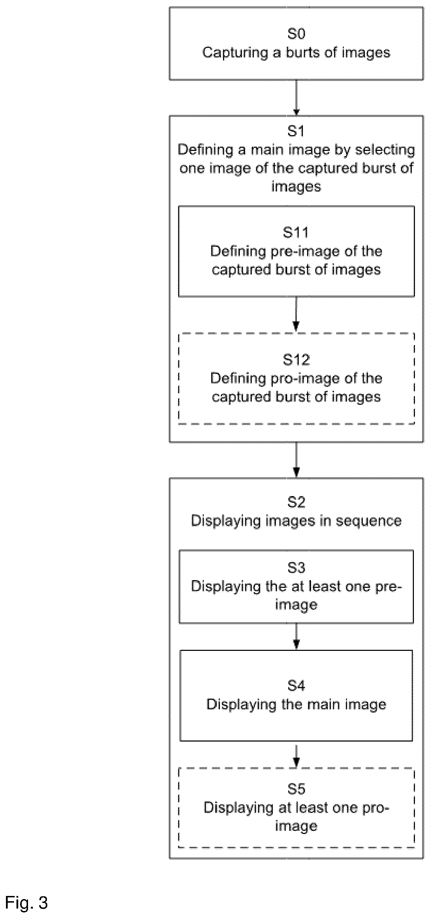

The method will now be described starting from figure 3 disclosing method steps, performed in an electronic device 10, i.e. a mobile phone, for displaying an image on a display 15 of the electronic device, wherein the image is one selected image of a burst of images.

According to one aspect the method is initiated by the camera of the mobile phone capturing S0 an image in a burst series, or a stream of images. This implies that a user of the mobile phone takes a photo by using burst mode or time shift mode. The number of images may be captured at a set frame rate. For example, the images may be captured at a default frame rate. In another example, the images may be captured at a frame rate input by the user. According to one example, the burst of images includes at least three images. After the images have been captured, the images may be processed. For example, the captured burst of images may be displayed to the user. In another example, the burst of images may be grouped together in a photo gallery or a photo album and the user may be able to expand the burst of images to view the all the images within the captured burst of images. The images may be in any format, such as JPEG, TIFF, PNG, GIF, BMP, or any other acceptable format.

In the first step S1 the main image 1 is defined by selecting one image of the captured burst of images 4. In one aspect of the step of selecting, the images obtained before the selected main image S11 in the burst of images are defined as pre-images 2. In one aspect of the step of selecting, the images obtained after the selected main image S12 are defined as pro-images 3. According to one aspect the method further comprises the steps of storing said pre-images 2 and pro-images 3 with low resolution and storing said main image 1 with high resolution in the memory 11 of the mobile phone.

In the second step S2 the defined images is displayed in sequence when main image is selected by a user.

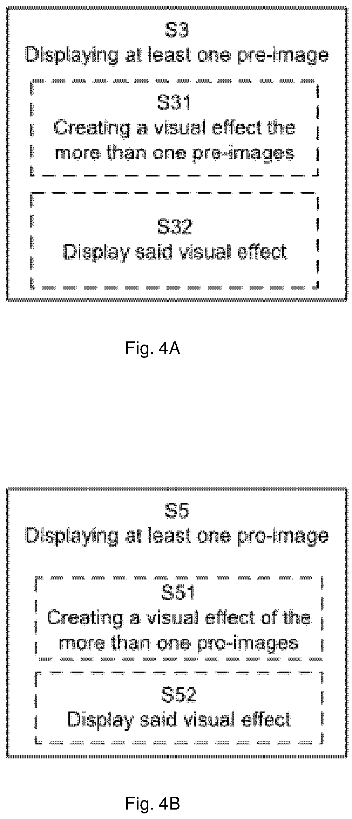

In a third step, the defined at least one pre-image 2 is displayed S3 on the display 15. According to one aspect of the step of displaying the at least one pre-image S3, as shown in figure 4a, wherein the pre-image consists of more than one image, comprises generating a visual effect S31 based on the more than one pre-image 2 associated with the selected main image 1. The visual effect is subsequently displayed S32 in association with displaying the defined pre-images by display means of the mobile phone. According to one aspect of the step of generating a visual effect comprises displaying the at least more than one pre-images directly after each other's in sequence, starting with the first pre-image of the burst of images, thus creating an in-transition or zoom in effect. According to one aspect of the step of displaying comprises pre-defining a rate of displaying the at least more than one pre-image. According to one aspect of the step of displaying comprises adding a light effect or a sound effect when displaying the pre-image or the sequence of pre-images.

In the fourth step S4 the main image is displayed in sequence after the pre-image has been displayed on the display of the mobile phone. The main image is displayed on the display until the user of the mobile phone decides to change to another image or another view. According to one aspect of the step of displaying comprises adding a light effect or a sound effect when displaying the main image.

In the fifth step S5 the at least one pro-image 2 is displayed on the display of the mobile phone when the user decides to stop displaying the selected main image and selects another image or view. According to one aspect the step of displaying the at least one pro-image, as shown in figure 4b, wherein the pro-image consists of more than one image, comprises creating a visual effect S51 of the more than one pro-images and displaying S52 the at least more than one pro-image 3 with the visual effect after displaying the main image 1. According to one aspect of the step of creating a visual effect comprises displaying the at least more than one pro-images directly after each other's, starting with the first pro-image of the burst of images, thus creating an out-transition or zoom out effect. According to one aspect of the step of displaying comprises pre-defining a rate of displaying the at least more than one pro-image. According to one aspect of the step of displaying comprises adding a light effect or a sound effect when displaying the pro-image or sequence of pro-images.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

## Claims

1. An electronic device (10) comprising:
a display (15); and
a controller circuit (12), configured to control the electronic device to:
provide a captured burst of images (4), comprising at least three images including
a main image (1), and
a plurality of pre-images (2) captured before said main image in the burst of images ;
**characterized in that** the controller circuit is further configured to control the electronic device to:
display (S2), in an album application of images, the pre-images (2) and the main image (1) in sequence on the display (15), wherein the pre-images (2) are played back (S3) at a predetermined rate until stopping at the main image, and
maintain display (S4) of the main image (1) until user input is detected to change to another image or another view.

2. The electronic device (10) of claim 1, wherein the controller circuit is configured to control the electronic device to display the pre-images and the main image in sequence upon user operation being detected to display said main image in the album application.

3. The electronic device (10) of claim 1 or 2, wherein the controller circuit is configured to control the electronic device to display the pre-images and the main image in sequence upon user operation being detected to navigate between images in the album application.

4. The electronic device (10) of claim 1 or 2, wherein the controller circuit is configured to control the electronic device to display the pre-images and the main image in sequence upon user operation being detected to swipe over images in the album application.

5. The electronic device (10) of claim 1 or 2, wherein the controller circuit is configured to control the electronic device to display the pre-images and the main image in sequence upon user operation being detected to rearrange a grid of the album application.

6. The electronic device (10) of claim 1 or 2, wherein the controller circuit is configured to control the electronic device to display the pre-images and the main image in sequence upon user operation being detected to scroll to display more images in the album application.

7. The electronic device (10) of any preceding claim, wherein the controller circuit is configured to control the electronic device to:
generate a visual effect (S31) of the pre-images (2); and
display (S32) the pre-images (2) with said generated visual effect before displaying the main image (1).

8. The electronic device (10) of claim 7, wherein, to generate the visual effect, the controller circuit is configured to control the electronic device to:
create a zoom in effect by displaying the pre-images after each other until stopping at the main image.

9. The electronic device (10) of claim 7 or 8, wherein, to generate the visual effect, the controller circuit is configured to control the electronic device to:
add a light effect or a sound effect to the displaying of the pre-images after each other until stopping at the main image.

10. The electronic device (10) of any preceding claim, wherein the controller circuit is configured to control the electronic device to:
store said pre-images (2) obtained before said main image (1) with low resolution; and
store said main image (1) with high resolution.

11. The electronic device (10) of any preceding claim, wherein the controller circuit is further configured to control the electronic device to:
define (S12) a plurality of pro-images (3) obtained after the main image in the burst of images;
display (S5), responsive to detecting user navigation away from the main image, the pro-images (3) in sequence after displaying the main image (1) on the display.

12. electronic device of claim 11, wherein the controller circuit is configured to control the electronic device to:
generate a visual effect (S51) of the pro-images (3); and
display (S52) the pro-images with said generated visual effect after displaying the main image.

13. The electronic device of claim 11 or 12, wherein, to generate the visual effect, the controller circuit is configured to control the electronic device to:
create a zoom out effect by displaying the pro-images directly after each other, image by image, starting with a first of the at least one pro-images.

14. The electronic device (10) of claim 12 or 13, wherein, to generate the visual effect, the controller circuit is configured to control the electronic device to:
add a light effect or a sound effect to the displaying of the pro-images.

15. A method for displaying (S2) an image (1) in an image album application on a display (15), wherein the method comprises the step of:
providing a captured (S0) burst of images (4), comprising at least three images including
a (S1) main image (1), and
a plurality of (S11) pre-images (2) captured before the main image in the burst of images;
the method **characterized in that** it further comprises the steps of:
displaying (S2), in an album application of images, the pre-images (2) and the main image (1) in sequence on the display (15), wherein the pre-images (2) are played back (S3) at a predetermined rate until stopping at the main image, and
maintaining display (S4) of the main image (1) until user input is detected to change to another image or another view.

## Patentansprüche

1. Elektronische Vorrichtung (10), umfassend:
eine Anzeige (15) und
eine Steuereinrichtungsschaltung (12), die konfiguriert ist, um die elektronische Vorrichtung zu steuern, zum:
Bereitstellen einer erfassten Bildserie (4), umfassend mindestens drei Bilder, einschließlich
eines Hauptbilds (1) und
einer Vielzahl von Vorbildern (2), die vor dem Hauptbild in der Bildserie erfasst werden;
**dadurch gekennzeichnet, dass** die Steuereinrichtungsschaltung ferner konfiguriert ist, um die elektronische Vorrichtung zu steuern, zum:
Anzeigen (S2), in einer Albumanwendung von Bildern, der Vorbilder (2) und des Hauptbilds (1) nacheinander auf der Anzeige (15), wobei die Vorbilder (2) mit einer vorbestimmten Rate wiedergegeben (S3) werden, bis beim Hauptbild angehalten wird, und
Beibehalten der Anzeige (S4) des Hauptbilds (1), bis eine Benutzereingabe, zu einem anderen Bild oder einer anderen Ansicht zu wechseln, detektiert wird.

2. Elektronische Vorrichtung (10) nach Anspruch 1, wobei die Steuereinrichtungsschaltung konfiguriert ist, um die elektronische Vorrichtung so zu steuern, dass die Vorbilder und das Hauptbild nacheinander angezeigt werden, wenn eine Benutzerbedienung, um das Hauptbild in der Albumanwendung anzuzeigen, detektiert wird.

3. Elektronische Vorrichtung (10) nach Anspruch 1 oder 2, wobei die Steuereinrichtungsschaltung konfiguriert ist, um die elektronische Vorrichtung so zu steuern, dass die Vorbilder und das Hauptbild nacheinander angezeigt werden, wenn eine Benutzerbedienung, um zwischen Bildern in der Albumanwendung zu navigieren, detektiert wird.

4. Elektronische Vorrichtung (10) nach Anspruch 1 oder 2, wobei die Steuereinrichtungsschaltung konfiguriert ist, um die elektronische Vorrichtung so zu steuern, dass die Vorbilder und das Hauptbild nacheinander angezeigt werden, wenn eine Benutzerbedienung, um über Bilder in der Albumanwendung zu wischen, detektiert wird.

5. Elektronische Vorrichtung (10) nach Anspruch 1 oder 2, wobei die Steuereinrichtungsschaltung konfiguriert ist, um die elektronische Vorrichtung so zu steuern, dass die Vorbilder und das Hauptbild nacheinander angezeigt werden, wenn eine Benutzerbedienung, um ein Raster der Albumanwendung neu anzuordnen, detektiert wird.

6. Elektronische Vorrichtung (10) nach Anspruch 1 oder 2, wobei die Steuereinrichtungsschaltung konfiguriert ist, um die elektronische Vorrichtung so zu steuern, dass die Vorbilder und das Hauptbild nacheinander angezeigt werden, wenn eine Benutzerbedienung zum Scrollen, um weitere Bilder in der Albumanwendung anzuzeigen, detektiert wird.

7. Elektronische Vorrichtung (10) nach einem der vorstehenden Ansprüche, wobei die Steuereinrichtungsschaltung konfiguriert ist, um die elektronische Vorrichtung zu steuern, zum:
Erzeugen eines visuellen Effekts (S31) der Vorbilder (2) und
Anzeigen (S32) der Vorbilder (2) mit dem erzeugten visuellen Effekt vor dem Anzeigen des Hauptbilds (1).

8. Elektronische Vorrichtung (10) nach Anspruch 7, wobei, um den visuellen Effekt zu erzeugen, die Steuereinrichtungsschaltung konfiguriert ist, um die elektronische Vorrichtung zu steuern, zum:
Erstellen eines Heranzoom-Effekts durch Anzeigen der Vorbilder nacheinander, bis beim Hauptbild angehalten wird.

9. Elektronische Vorrichtung (10) nach Anspruch 7 oder 8, wobei, um den visuellen Effekt zu erzeugen, die Steuereinrichtungsschaltung konfiguriert ist, um die elektronische Vorrichtung zu steuern, zum:
Hinzufügen eines Lichteffekts oder eines Toneffekts zum Anzeigen der Vorbilder nacheinander, bis beim Hauptbild angehalten wird.

10. Elektronische Vorrichtung (10) nach einem der vorstehenden Ansprüche, wobei die Steuereinrichtungsschaltung konfiguriert ist, um die elektronische Vorrichtung zu steuern, zum:
Speichern der Vorbilder (2), die vor dem Hauptbild (1) erhalten werden, mit niedriger Auflösung und
Speichern des Hauptbilds (1) mit hoher Auflösung.

11. Elektronische Vorrichtung (10) nach einem der vorstehenden Ansprüche, wobei die Steuereinrichtungsschaltung ferner konfiguriert ist, um die elektronische Vorrichtung zu steuern, zum:
Definieren (S12) einer Vielzahl von Vorbildern (3), die nach dem Hauptbild in der Bildserie erhalten werden;
Anzeigen (S5), als Reaktion auf ein Detektieren einer Benutzernavigation weg vom Hauptbild, der Vorbilder (3) nacheinander nach dem Anzeigen des Hauptbilds (1) auf der Anzeige.

12. Elektronische Vorrichtung nach Anspruch 11, wobei die Steuereinrichtungsschaltung konfiguriert ist, um die elektronische Vorrichtung zu steuern, zum:
Erzeugen eines visuellen Effekts (S51) der Vorbilder (3) und
Anzeigen (S52) der Vorbilder mit dem erzeugten visuellen Effekt nach dem Anzeigen des Hauptbilds.

13. Elektronische Vorrichtung nach Anspruch 11 oder 12, wobei, um den visuellen Effekt zu erzeugen, die Steuereinrichtungsschaltung konfiguriert ist, um die elektronische Vorrichtung zu steuern, zum:
Erstellen eines Herauszoom-Effekts durch Anzeigen der Vorbilder direkt hintereinander, Bild für Bild, beginnend mit einem ersten des mindestens einen Vorbilds.

14. Elektronische Vorrichtung (10) nach Anspruch 12 oder 13, wobei, um den visuellen Effekt zu erzeugen, die Steuereinrichtungsschaltung konfiguriert ist, um die elektronische Vorrichtung zu steuern, zum:
Hinzufügen eines Lichteffekts oder eines Toneffekts zum Anzeigen der Vorbilder.

15. Verfahren zum Anzeigen (S2) eines Bilds (1) in einer Bildalbumanwendung auf einer Anzeige (15), wobei das Verfahren den Schritt umfasst:
Bereitstellen einer erfassten (S0) Bildserie (4), umfassend mindestens drei Bilder, einschließlich
eines (S1) Hauptbilds (1) und
einer Vielzahl (S11) von Vorbildern (2), die vor dem Hauptbild in der Bildserie erfasst werden;
das Verfahren **dadurch gekennzeichnet, dass** es ferner die Schritte umfasst:
Anzeigen (S2), in einer Albumanwendung von Bildern, der Vorbilder (2) und des Hauptbilds (1) nacheinander auf der Anzeige (15), wobei die Vorbilder (2) mit einer vorbestimmten Rate wiedergegeben (S3) werden, bis beim Hauptbild angehalten wird, und
Beibehalten der Anzeige (S4) des Hauptbilds (1), bis eine Benutzereingabe, zu einem anderen Bild oder einer anderen Ansicht zu wechseln, detektiert wird.

## Revendications

1. Dispositif électronique (10) comprenant :
un affichage (15) ; et
un circuit de commande (12), configuré pour commander le dispositif électronique pour :
fournir une rafale d'images capturées (4), comprenant au moins trois images comportant
une image principale (1), et
une pluralité de pré-images (2) capturées avant l'image principale dans la rafale d'images ;
**caractérisé en ce que** le circuit de commande est en outre configuré pour commander le dispositif électronique pour :
afficher (S2), dans une application d'album d'images, les pré-images (2) et l'image principale (1) en séquence sur le dispositif d'affichage (15), dans lequel les pré-images (2) sont lues (S3) à une vitesse prédéterminée jusqu'à l'arrêt sur l'image principale, et
maintenir l'affichage (S4) de l'image principale (1) jusqu'à ce que l'on détecte une entrée utilisateur pour changer pour une autre image ou une autre vue.

2. Dispositif électronique (10) selon la revendication 1, dans lequel le circuit de commande est configuré pour commander le dispositif électronique afin d'afficher les pré-images et l'image principale en séquence lors de la détection d'une opération de l'utilisateur pour afficher ladite image principale dans l'application d'album.

3. Dispositif électronique (10) selon la revendication 1 ou 2, dans lequel le circuit de commande est configuré pour commander au dispositif électronique d'afficher les pré-images et l'image principale en séquence lors de la détection d'une opération de l'utilisateur pour naviguer entre des images dans l'application d'album.

4. Dispositif électronique (10) selon la revendication 1 ou 2, dans lequel le circuit de commande est configuré pour commander au dispositif électronique d'afficher les pré-images et l'image principale en séquence lors de la détection d'une opération de l'utilisateur consistant à balayer des images dans l'application d'album.

5. Dispositif électronique (10) selon la revendication 1 ou 2, dans lequel le circuit de commande est configuré pour commander le dispositif électronique pour afficher les pré-images et l'image principale en séquence lors de la détection d'une opération de l'utilisateur pour réorganiser une grille de l'application d'album.

6. Dispositif électronique (10) selon la revendication 1 ou 2, dans lequel le circuit de commande est configuré pour commander au dispositif électronique d'afficher les pré-images et l'image principale en séquence lors de la détection d'une opération de l'utilisateur pour faire défiler afin d'afficher plus d'images dans l'application d'album.

7. Dispositif électronique (10) selon l'une quelconque revendication précédente, dans lequel le circuit de commande est configuré pour commander le dispositif électronique pour :
générer un effet visuel (S31) des pré-images (2) ; et
afficher (S32) les pré-images (2) avec ledit effet visuel généré avant affichage de l'image principale (1).

8. Dispositif électronique (10) selon la revendication 7, dans lequel, pour générer l'effet visuel, le circuit de commande est configuré pour commander le dispositif électronique pour :
créer un effet de zoom avant en affichant les pré-images directement les unes après les autres jusqu'à arrêt au niveau de l'image principale.

9. Dispositif électronique (10) selon la revendication 7 ou 8, dans lequel, pour générer l'effet visuel, le circuit de commande est configuré pour commander le dispositif électronique pour :
ajouter un effet lumineux ou un effet sonore à l'affichage des pré-images les unes après les autres jusqu'à l'arrêt sur l'image principale.

10. Dispositif électronique (10) selon l'une quelconque revendication précédente, dans lequel le circuit de commande est configuré pour commander le dispositif électronique pour :
stocker lesdites pré-images (2) obtenues avant ladite image principale (1) avec une faible résolution ; et
stocker ladite image principale (1) avec une résolution élevée.

11. Dispositif électronique (10) selon l'une quelconque revendication précédente, dans lequel le circuit de commande est configuré en outre pour commander le dispositif électronique pour :
définir (S12) une pluralité d'images antécédentes (3) obtenues après l'image principale dans la rafale d'images ;
afficher (S5), en réponse à la détection d'une navigation d'utilisateur à l'écart de l'image principale, les images antécédentes (3) après affichage de l'image principale (1) en séquence sur l'affichage.

12. Dispositif électronique selon la revendication 11, dans lequel le circuit de commande est configuré pour commander le dispositif électronique pour :
générer un effet visuel (S31) des images antécédentes (3) ; et
afficher (S32) les images antécédentes avec ledit effet visuel généré avant affichage de l'image principale.

13. Dispositif électronique selon la revendication 11 ou 12, dans lequel, pour générer l'effet visuel, le circuit de commande est configuré pour commander le dispositif électronique pour :
créer un effet de zoom arrière en affichant les au moins plusieurs images antécédentes directement les unes après les autres, image par image, en commençant par la première des au moins plusieurs images antécédentes.

14. Dispositif électronique (10) selon la revendication 12 ou 13, dans lequel, pour générer l'effet visuel, le circuit de commande est configuré pour commander le dispositif électronique pour :
ajouter un effet lumineux ou un effet sonore lors de l'affichage des pro-images.

15. Procédé permettant d'afficher (S2) une image (1) dans une application d'album d'images sur un dispositif d'affichage (15), dans lequel le procédé comprend l'étape consistant à :
fournir une rafale d'images (4) capturées (S0), comprenant au moins trois images comportant
une (S1) image principale (1), et
une pluralité de (S11) pré-images (2) capturées avant l'image principale dans la rafale d'images ;
et **caractérisé en ce que** le procédé comprend en outre les étapes consistant à :
afficher (S2), dans une application d'album d'images, des pré-images (2) et de l'image principale (1) en séquence sur le dispositif d'affichage (15), dans lequel les pré-images (2) sont lues (S3) à une vitesse prédéterminée jusqu'à l'arrêt sur l'image principale, et
maintenir l'affichage (S4) de l'image principale (1) jusqu'à ce que l'on détecte une entrée utilisateur pour changer pour une autre image ou une autre vue.
